# EUROPÄISCHE PATENTANMELDUNG

(11) **EP 3 530 428 A1**
(43) Veröffentlichungstag der Anmeldung: **28.08.2019**
(21) Anmeldenummer: 19150628.6
(22) Anmeldetag: 08.01.2019
(51) Int. Cl.: B29B 7/60, B29B 7/72, B29B 7/74

(54) **VORRICHTUNG ZUM SENKEN DER VISKOSITÄT EINER SCHWEFELVERNETZBAREN KAUTSCHUKMISCHUNG, VERWENDUNG DER VORRICHTUNG, UND VERFAHREN ZUM HERSTELLEN EINER PLASTIFIZIERTEN SCHWEFELVERNETZBAREN KAUTSCHUKMISCHUNG**

(30) Priorität: 21.02.2018 DE 102018202609
(71) Anmelder: Continental Reifen Deutschland GmbH, 30165 Hannover (DE)
(72) Erfinder: Steiner, Frank Stefan, 30167 Hannover (DE); Sharifi, Monir, 30952 Ronnenberg (DE); Völker, Thomas, 30926 Seelze (DE)
(74) Vertreter: Finger, Karsten

(57) **Zusammenfassung**

Vorrichtung zum Senken der Viskosität einer schwefelvernetzbaren Kautschukmischung, umfassend eine Plastifizierungseinheit zum Plastifizieren von schwefelvernetzbaren Kautschukmischungen und eine der Plastifizierungseinheit nachgeschalteten Zuführeinheit zum Zuführen von Kautschukmischungen in eine Extrusionseinheit, dadurch gekennzeichnet, dass die Vorrichtung Mittel zur Regelung der Verweilzeit einer schwefelvernetzbaren Kautschukmischung in der Zuführeinheit umfasst. Des weiteren wird die Verwendung der Vorrichtung und ein Verfahren zum Herstellen einer plastifizierten schwefelvernetzbaren Kautschukmischung offenbart.

## Beschreibung

Die Erfindung betrifft eine Vorrichtung zum Senken der Viskosität einer schwefelvernetzbaren Kautschukmischung, umfassend eine Plastifizierungseinheit zum Plastifizieren von plastifizierten, schwefelvernetzbaren Kautschukmischungen, und eine der Plastifizierungseinheit nachgeschalteten Zuführeinheit zum Zuführen von Kautschukmischungen in eine Extrusionseinheit. Die Erfindung betrifft auch die Verwendung der Vorrichtung und ein Verfahren zum Herstellen einer plastifizierten, schwefelvernetzbaren Kautschukmischung.

Aufgrund der momentanen Entwicklungen in der Kautschukindustrie, insbesondere bei der Reifenherstellung, führen die neuartigen Rezepturen der Kautschukmischungen häufig zu Mischungen, welche eine sehr hohe Viskosität aufweisen. Diese hochviskosen Kautschukmischungen konnten häufig aufgrund erhöhter Herstellungstemperaturen verarbeitet werden. Jedoch kann die Herstellungstemperatur nicht beliebig erhöht werden, da es sonst zum sogenannten "Pre-Scorch" kommt. Insbesondere bei den neuartigen Rezepturen wird die Viskosität der Kautschukmischungen daher mithilfe zusätzlicher Mischstufen verringert. Dies hat jedoch den Nachteil, dass der Herstellungsprozess um mehrere Stunden verlängert werden kann und dass die zusätzlichen Mischstufen bestimmte Materialeigenschaften verschlechtern können, wie beispielsweise den Rollwiderstand. Die Zugabe von chemischen Bestandteilen zur Verringerung der Viskosität der Kautschukmischungen ist aus umweltrelevanten und Kostengründen nachteilig.

Eine Aufgabe, die der Erfindung zugrunde liegt, besteht daher darin, ein Verfahren zum Herstellen einer plastifizierten, schwefelvernetzbaren Kautschukmischung und eine Vorrichtung zum Senken der Viskosität einer schwefelvernetzbaren Kautschukmischung bereitzustellen, welche die vorstehend beschriebenen bekannten Nachteile nicht aufweist.

Gelöst wird diese Aufgabe erfindungsgemäß durch eine Vorrichtung zum Senken der Viskosität einer schwefelvernetzbaren Kautschukmischung, umfassend
- eine Plastifizierungseinheit zum Plastifizieren von schwefelvernetzbaren Kautschukmischungen,
   und
- eine der Plastifizierungseinheit nachgeschalteten Zuführeinheit zum Zuführen von Kautschukmischungen in eine Extrusionseinheit,
dadurch gekennzeichnet, dass
die Vorrichtung Mittel zur Regelung der Verweilzeit einer schwefelvernetzbaren Kautschukmischung in der Zuführeinheit umfasst.

Überraschenderweise wurde festgestellt, dass durch das Vorschalten einer Plastifizierungseinheit in Kombination mit einer entsprechend gesteuert oder geregelten Zuführeinheit vor eine Extrudereinheit die Viskosität der zu verarbeitenden Kautschukmischung ohne Zusatz von weiteren chemischen Bestandteilen signifikant gesenkt werden kann. Wichtig ist hierbei, dass die Verweilzeit der zu verarbeitenden Kautschukmischung in der Zuführeinheit an den Druck und den Energieeintrag in der Plastifizierungseinheit so angepasst wird, dass die Temperatur beim Zuführen der Kautschukmischung in die nachgeschaltete Extrudereinheit eine ausreichend niedrige Temperatur aufweist. Im Rahmen der vorliegenden Erfindung können die Mittel zur Regelung der Verweilzeit einer schwefelvernetzbaren Kautschukmischung in der Zuführeinheit auch Mittel zur Steuerung der Verweilzeit einer schwefelvernetzbaren Kautschukmischung in der Zuführeinheit sein.
Es ist eine besondere Leistung der vorliegenden Erfindung, erkannt zu haben, dass auch wenn die Kautschukmischung nach dem Plastifizieren auf die gleiche Temperatur wie vor dem Plastifizieren abgekühlt ist, sie dennoch eine verringerte Viskosität aufweist. Ohne an irgendeine wissenschaftliche Theorie gebunden sein zu wollen, wird vermutet, dass die in der Plastifizierungseinheit verstärkt auftretenden Scherkräfte in der Kautschukmischung zu einer gewissen Ordnung und Ausrichtung der Kautschukmoleküle führen. Diese Ordnung kann sogar innerhalb von Minuten zu einer verringerten Viskosität führen, ohne dass andere physikalische oder chemische Eigenschaften der Kautschukmischung signifikant verschlechtert werden.
Die Verweilzeit sollte dabei so gewählt werden, dass die Temperatur der gesamten Kautschukmischung oder eines Teils der Kautschukmischung beim Zuführen der Kautschukmischung in die nachgeschaltete Extrudereinheit nicht über 130 °C liegt. Bevorzugt ist die Temperatur Tᵢₙᵢ dabei im Bereich von 10 °C bis 120 °C, besonders bevorzugt im Bereich von 15 °C bis 80 °C, ganz besonders bevorzugt im Bereich von 20 °C bis 50 °C. Bevorzugt übersteigt die Verweilzeit der klassifizierten Kautschukmischung in der Zuführeinheit nicht eine Verweilzeit von 60 Minuten.

Bevorzugt ist eine Vorrichtung wie vorstehend beschrieben oder wie vorstehend als bevorzugt beschrieben, wobei die Vorrichtung zusätzlich eine der Zuführeinheit nachgeschalteten Extrusionseinheit umfasst, wobei die Extrusionseinheit bevorzugt ein Extruder mit mindestens einer Extruderschnecke ist.

Bevorzugt ist eine Vorrichtung wie vorstehend beschrieben oder wie vorstehend als bevorzugt beschrieben, wobei die Plastifizierungseinheit einen Mischer, eine Zahnradpumpe, ein Walzwerk oder eine Extrusionseinheit mit einer oder mehreren Extruderschnecke aufweist, wobei die Plastifizierungseinheit bevorzugt eine Zahnradpumpe, ein Walzwerk oder eine Extrusionseinheit mit einer oder mehreren Extruderschnecke aufweist, besonders bevorzugt eine Extrusionseinheit mit einer oder mehreren Extruderschnecke und einer Extruderdüse ist.

Ein Beispiel einer Extrusionseinheit mit einer Extruderschnecke ist ein Kaltfütterextruder. Ein Kaltfütterextruder kann mit verschiedenen Extruderdüsen verwendet werden.

Bevorzugt ist eine Vorrichtung wie vorstehend beschrieben oder wie vorstehend als bevorzugt beschrieben, wobei die Zuführeinheit ein Transportmittel, einen Speicher für Kautschukmischungen und/oder Kühlmittel aufweist.

Ein Beispiel für Transportmittel ist ein Transportband und ein Beispiel für ein Kühlmittel ist beispielsweise eine Sprühkühlung, welche mit Hilfe eines flüssigen Sprühmittels wie Wasser die plastifizierte Kautschukmischung abkühlt.
Besonders bevorzugt umfasst die Zuführeinheit jedoch einen Speicher für Kautschukmischungen wie beispielsweise einen Kammspeicher oder einen Festooner. Ein Vorteil des Kammspeichers oder des Festooners ist, dass mit Hilfe des Speichers die Verweilzeit der Mischung problemlos an die Anforderungen des nachfolgenden Extrusionsprozesses angepasst werden kann.

Mittel zur Regelung der Verweilzeit einer Schwefelvernetzbaren Kautschukmischung in der Zuführeinheit sind beispielsweise Mittel zur Regelung der Transportgeschwindigkeit des Transportmittels, wie beispielsweise der Fördergeschwindigkeit eines Transportmittels, die Schlaufenlängen im Speicher, geometrische Dimensionen wie z.B. Dicke und Breite der plastifizierten Kautschukmischung oder Mittel zur Regelung der Lagerzeit der plastifizierten Kautschukmischung in dem Speicher für Kautschukmischungen.

Bevorzugt ist eine Vorrichtung wie vorstehend beschrieben oder wie vorstehend als bevorzugt beschrieben, wobei die Vorrichtung
- zusätzlich zu den Mitteln zur Regelung der Verweilzeit einer schwefelvernetzbaren Kautschukmischung in der Zuführeinheit
   oder
- anstelle der Mittel zur Regelung der Verweilzeit einer schwefelvernetzbaren Kautschukmischung in der Zuführeinheit
   Mittel zur Regelung
   a. der Drehgeschwindigkeit der Schnecken, Zahnräder oder Walzen der Plasitfizierungseinheit
      und/oder
   b. der Temperatur und des Druckes der Kautschukmischung in der Plastifizierungseinheit
      und/oder
   c. der Temperatur der in die Zuführeinheit überführten Kautschukmischung und/oder
   d. der in die Zuführeinheit überführten Kautschukmischungsmenge umfasst.

Ein Vorteil des vorstehend beschriebenen Aspekts der vorliegenden Erfindung ist, dass durch die Regelung der vorstehend beschriebenen Parameter gemäß den vorstehend beschriebenen Optionen a., b., c. und d. eine optimale Verweilzeit für die klassifizierten Kautschukmischung in der Zuführeinheit ermittelt werden kann.

Bevorzugt ist eine Vorrichtung wie vorstehend beschrieben oder wie vorstehend als bevorzugt beschrieben, wobei die Vorrichtung zusätzlich zu den Mitteln zur Regelung der Verweilzeit einer schwefelvernetzbaren Kautschukmischung in der Zuführeinheit oder anstelle der Mittel zur Regelung der Verweilzeit einer schwefelvernetzbaren Kautschukmischung in der Zuführeinheit Mittel zur Regelung
a. der Drehgeschwindigkeit der Schnecken, Zahnräder oder Walzen der Plasitfizierungseinheit
   in Abhängigkeit
b. der Temperatur und/oder des Druckes der Kautschukmischung in der Plastifizierungseinheit
umfasst.

Ein Vorteil des vorstehend beschriebenen Aspekts der vorliegenden Erfindung ist, dass durch die Regelung der Drehgeschwindigkeit in Abhängigkeit der Temperatur oder des Druckes der Kautschukmischung die Temperatur der aus der Plastifizierungseinheit austretenden Kautschukmischung so eingestellt werden kann, dass eine ausreichend niedrige Viskosität und Verweilzeit erreicht werden kann. Somit kann die Viskosität der Kautschukmischung beim Eintritt in die Extrusionseinheit noch genauer geregelt werden.

In besonders hohem Maße bevorzugt ist eine Vorrichtung wie vorstehend beschrieben umfassend
- eine Plastifizierungseinheit zum Plastifizieren von schwefelvernetzbaren Kautschukmischungen,
   und
- eine der Plastifizierungseinheit nachgeschalteten Zuführeinheit zum Zuführen von schwefelvernetzbaren Kautschukmischungen in eine Extrusionseinheit
dadurch gekennzeichnet, dass
die Vorrichtung Mittel zur Regelung
a) der in die Zuführeinheit überführten schwefelvernetzbaren Kautschukmischungsmenge,
b) der Verweilzeit einer schwefelvernetzbaren Kautschukmischung in der Zuführeinheit
   und
c) der Temperatur der in die Zuführeinheit überführten schwefelvernetzbaren Kautschukmischungsmenge
wobei
- die Plastifizierungseinheit eine Extrusionseinheit mit einer Extruderschnecke und einer Extruderdüse aufweist,
- die Zuführeinheit einen Speicher für Kautschukmischungen aufweist,
   und
- die Vorrichtung zusätzlich Mittel zur Regelung der Drehgeschwindigkeit der einen Extruderschnecke der Extrusionseinheit der Plastifizierungseinheit aufweist.

Die vorstehend beschriebenen vorteilhaften Aspekte einer erfindungsgemäßen Vorrichtung zum Senken der Viskosität einer schwefelvernetzbaren Kautschukmischung gelten auch für sämtliche Aspekte der nachstehend beschriebenen Verwendungen und die nachstehend diskutierten vorteilhaften Aspekte erfindungsgemäßer Verwendungen gelten entsprechend für sämtliche Aspekte einer erfindungsgemäßen Vorrichtung zum Senken der Viskosität einer schwefelvernetzbaren Kautschukmischung.

Die Erfindung betrifft auch eine Verwendung einer Vorrichtung wie vorstehend beschreiben oder wie vorstehend als bevorzugt beschrieben, zum Reduktion des Druckes beim Extrudieren oder zur Reduktion des Drehmoments der Extruderschnecke von schwefelvernetzbaren Kautschukmischungen bei der Temperatur T_{Extrusion}, wobei die Temperatur T_{Extrusion} im Bereich von 50 °C bis 150 °C liegt. Bevorzugt ist T_{Extrusion} im Bereich von 60 °C bis 140 °C, besonders bevorzugt im Bereich von 90 °C bis 130 °C. Hierbei bezieht sich die Temperaturangabe zur T_{Extrusion} bevorzugt auf die Massentemperatur.
Die Temperatur der Kautschukmischung ist bevorzugt vor und nach der Verwendung der erfindungsgemäßen Vorrichtung gleich, besonders bevorzugt vor Plastifizieren und nach dem Verweilen in der Zuführeinheit gleich sein.
Die Erfindung betrifft auch eine Verwendung einer Vorrichtung wie vorstehend beschreiben oder wie vorstehend als bevorzugt beschrieben, zum Verringern der Drehgeschwindigkeit der Extruderschnecke beim Extrudieren in einer Extrusionseinheit oder zur Erhöhung des Durchsatzes beim Extrudieren der schwefelvernetzbaren Kautschukmischungen bei der Temperatur T_{Extrusion},
Die vorstehend beschriebenen vorteilhaften Aspekte einer erfindungsgemäßen Vorrichtung zum Senken der Viskosität einer schwefelvernetzbaren Kautschukmischung und der entsprechenden Verwendungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zum Senken der Viskosität einer schwefelvernetzbaren Kautschukmischung und entsprechender Verwendungen.

Die Erfindung betrifft auch ein Verfahren zum Herstellen einer plastifizierten, schwefelvernetzbaren Kautschukmischung, umfassend die folgenden Verfahrensschritte:
a. Herstellen oder Bereitstellen einer schwefelvernetzbaren Kautschukmischung,
b. Plastifizieren der in Schritt a. hergestellten oder bereitgestellten schwefelvernetzbaren Kautschukmischung, bevorzugt Plastifizieren der schwefelvernetzbaren Kautschukmischung in einer Plastifizierungseinheit wie vorstehend beschrieben oder wie vorstehend als bevorzugt beschrieben,
c. Überführen der in Schritt b. plastifizierten schwefelvernetzbaren Kautschukmischung in eine Zuführeinheit, und
d. Zufüttern der in Schritt c. überführten schwefelvernetzbaren Kautschukmischung aus der Zuführeinheit in eine Extrusionseinheit.

Das Plastifizieren einer schwefelvernetzbaren Kautschukmischung vor dem Zuführen in eine Extrusionseinheit in Kombination mit einer entsprechenden Verweilzeit hat die vorstehend beschriebenen Vorteile. Wichtig ist jedoch, dass die Kautschukmischung noch schwefelvernetzbar ist, da nur so die vorstehend beschriebenen Vorteile erzielt und Nachteile vermieden werden können.
Im Rahmen der vorliegenden Erfindung beginnt die Verweilzeit einer Kautschukmischung bevorzugt beim Austritt der Kautschukmischung aus der Plastifizierungseinheit und endet bevorzugt beim Eintritt in die der Zuführeinheit nachgeschalteten Extrusionseinheit. Die Verweilzeit ist bevorzugt im Bereich von 0,1 Minuten bis 10 Minuten, bevorzugt im Bereich von 0,2 Minuten bis 8 Minuten, ganz besonders bevorzugt im Bereich von 0,5 Minute bis 5 Minuten.
Mit dem erfindungsgemäßen Verfahren können nicht nur Schwefelvernetzbare Kautschukmischungen für Reifenbauteilen wie Seitenwände, Teile des Laufstreifens oder Teile des Wulstes hergestellt werden, sondern auch für Tansportbänder oder Federbälge.

Bevorzugt ist eine Vorrichtung wie vorstehend beschrieben oder wie vorstehend als bevorzugt beschrieben, wobei das Verfahren zusätzlich den Schritt e. umfasst:
e. Extrudieren der in Schritt d. zugefütterten schwefelvernetzbaren Kautschukmischung in der Extrusionseinheit,
wobei bevorzugt die Kautschukmischung während des Extrudierens zumindest teilweise
- eine Temperatur im Bereich von 20°C bis 150°C aufweist, bevorzugt im Bereich von 25°C bis 120°C,
und/oder
- einen konstanten Druck aufweist und/oder einen Druck im Bereich von 20 bar bis 70 bar vorliegt, bevorzugt 40 bis 60 bar.

Ein Vorteil des vorstehend beschriebenen Aspekts der vorliegenden Erfindung ist, dass insbesondere bei den vorstehend beschriebenen Herstellungsparametern in der Extrusionseinheit die vorstehend beschriebenen Nachteile vermieden werden können und somit die Verwendung einer Plastifizierungseinheit oder einer erfindungsgemäßen Vorrichtung wie vorstehend beschrieben oder wie vorstehend als bevorzugt beschrieben, zum Senken der Viskosität, insbesondere der Mooney-Viskosität, von schwefelvernetzbaren Kautschukmischungen besonders vorteilhaft ist.

Bevorzugt ist eine Vorrichtung wie vorstehend beschrieben oder wie vorstehend als bevorzugt beschrieben, wobei die in Schritt a. hergestellte oder bereitgestellte schwefelvernetzbare Kautschukmischung zumindest teilweise eine Temperatur im Bereich von 20°C bis 150°C aufweist, bevorzugt im Bereich von 25°C bis 120°C. Bevorzugt ist eine Vorrichtung wie vorstehend beschrieben oder wie vorstehend als bevorzugt beschrieben, wobei die in Schritt a. hergestellte oder bereitgestellte schwefelvernetzbare Kautschukmischung zumindest teilweise
- mindestens 50 phr Füllstoffe umfasst, bevorzugt mindestens 80 phr, und/oder
- höchstens 100 phr Harze umfasst, bevorzugt höchstens 50 phr, besonders bevorzugt höchstens 10 phr.

Ein Vorteil des vorstehend beschriebenen Aspekts der vorliegenden Erfindung ist, dass insbesondere Kautschukmischungen mit einem Füllstoff- und/oder Harz-Anteile wie vorstehend beschrieben eine zu hohe Viskosität aufweisen und somit die vorstehend beschriebenen Nachteile im Stand der Technik erzeugen. Daher ist es insbesondere bevorzugt, wenn die Kautschukmischung mindestens 80 phr Füllstoffe umfasst und höchstens 10 phr Harze umfasst.

Bevorzugt ist eine Vorrichtung wie vorstehend beschrieben oder wie vorstehend als bevorzugt beschrieben, wobei die in Schritt d. zugefütterte schwefelvernetzbare Kautschukmischung in der Extrusionseinheit zumindest teilweise eine Temperatur im Bereich von 20°C bis 150°C aufweist, bevorzugt im Bereich von 25°C bis 120°C.

Ein Vorteil des vorstehend beschriebenen Aspekts der vorliegenden Erfindung ist, dass die der Extrusionseinheit zugefütterten Kautschukmischung keine zu hohe Temperatur aufweist, sodass der vorstehend beschriebene Pre-Scorch vermieden werden kann.

Bevorzugt ist eine Vorrichtung wie vorstehend beschrieben oder wie vorstehend als bevorzugt beschrieben, wobei die in Schritt a. bereitgestellte oder hergestellte schwefelvernetzbare Kautschukmischung eine Mooney-Viskosität gemäß ASTM D1646 (ML1+4 bei 100 °C) im Bereich von 50 MU bis 200 MU aufweist, bevorzugt im Bereich von 70 MU bis 200 MU, besonders bevorzugt im Bereich von 90 MU bis 200 MU, ganz besonders bevorzugt im Bereich von120 MU bis 150 MU.

Ein Vorteil des vorstehend beschriebenen Aspekts der vorliegenden Erfindung ist, dass insbesondere schwefelvernetzbare Kautschukmischungen mit einer Mooney-Viskosität wie vorstehend beschrieben die im Stand der Technik bekannten Nachteile wie vorstehend beschrieben aufweisen.

In besonders hohem Maße bevorzugt ist ein Verfahren wie vorstehend beschrieben umfassend die folgenden Schritte:
a. Herstellen oder Bereitstellen einer schwefelvernetzbaren Kautschukmischung,
b. Plastifizieren der in Schritt a. hergestellten oder bereitgestellten schwefelvernetzbaren Kautschukmischung in einer ersten Extrusionseinheit mit einer Extruderschnecke und einer Extruderdüse, ist und die Drehgeschwindigkeit der einen Extruderschnecke im Bereich von 10 bis 70 U/min liegt,,
c. Überführen der in Schritt b. plastifizierten schwefelvernetzbaren Kautschukmischung in eine Zuführeinheit,
   und
d. Zufüttern der in Schritt c. überführten schwefelvernetzbaren Kautschukmischung aus der Zuführeinheit in eine weitere Extrusionseinheit,
wobei
- die in Schritt a. hergestellte oder bereitgestellte schwefelvernetzbare Kautschukmischung zumindest teilweise
   - eine Temperatur im Bereich von 20°C bis 120°C aufweist,
   - mindestens 80 phr Füllstoffe umfasst und
   - höchstens 10 phr Harze umfasst und
   - eine Mooney-Viskosität gemäß ASTM D1646 (ML1+4 bei 100 °C) im Bereich von 50 MU bis 200 MU aufweist,
- die in Schritt c. überführte schwefelvernetzbare Kautschukmischung eine Temperatur im Bereich von 60 bis 80 °C aufweist und für 0,1 Minuten bis 10 Minuten in der Zuführeinheit verweilt, bevor die schwefelvernetzbare Kautschukmischung in Schritt d. in eine weitere Extrusionseinheit zugefüttert wird,
und
- die in Schritt d. zugefütterte schwefelvernetzbare Kautschukmischung in der Extrusionseinheit zumindest teilweise eine Temperatur im Bereich von 25°C bis 120°C aufweist.

Die vorstehend beschriebenen vorteilhaften Aspekte einer erfindungsgemäßen Vorrichtung zum Senken der Viskosität einer schwefelvernetzbaren Kautschukmischung und der entsprechenden Verwendung sowie eines erfindungsgemäßen Verfahrens gelten auch für sämtliche Aspekte einer nachstehend beschriebenen Extrudervorrichtung und die nachstehend diskutierten vorteilhaften Aspekte erfindungsgemäßer Extrudervorrichtungen gelten entsprechend für sämtliche Aspekte einer erfindungsgemäßen Vorrichtung zum Senken der Viskosität einer schwefelvernetzbaren Kautschukmischung und entsprechender Verwendungen sowie erfindungsgemäßer Verfahren.

Die Erfindung betrifft auch eine Extrudervorrichtung zum Herstellen von extrudierten schwefelvernetzbaren Kautschukmischungen umfassend eine Vorrichtung wie vorstehend beschrieben oder wie vorstehend als bevorzugt beschrieben und eine weitere Extrusionseinheit.
Beispiele einer weiteren Extrusionseinheit sind Profilextruder, Kalander und/oder Steelastic-Anlagen, da das vorstehend beschriebene Verfahren nicht nur hilfreich bei Extrudern Verwendung findet.

Bevorzugt ist hierbei eine Extrudervorrichtung wie vorstehend beschrieben, die zur Herstellung von Laufstreifen eines Reifens geeignet ist.

Besonders bevorzugt ist eine Extrudervorrichtung wie vorstehend beschrieben oder wie vorstehend als bevorzugt beschrieben, wobei
- die Extrusionseinheit der erfindungsgemäßen Vorrichtung wie vorstehend beschrieben oder wie vorstehend als bevorzugt beschrieben
und/oder
- eine oder mehrere der weiteren Extrusionseinheiten
eine oder mehr als eine Extruderschnecke umfassen, ganz besonders bevorzugt eine eine Extruderschnecke umfassende Extrusionseinheit wie vorstehend beschrieben umfassen.

### Experimentelle Beispiele:

### Messmethoden:

### 1. Mooney-Viskosität

Die Ergebnisse wurden in Anlehnung an die Methode ASTM D1646 (ML1+4 bei 100 °C; Mooney-Einheiten M.E.) ermittelt.

### Herstellung:

### Herstellung einer Kautschukmischung:

Die Herstellung der schwefelvernetzbaren Kautschukmischungen erfolgt nach dem in der Kautschukindustrie üblichen Verfahren, bei dem zunächst in zwei Mischstufen eine Grundmischung mit allen Bestandteilen außer dem Vulkanisationssystem (Schwefel und Vulkanisationsmittel) hergestellt wird. Die verwendete Rezeptur der einzelnen Kautschukmischungen ist in Tabelle 1 dargestellt. Durch Zugabe des Vulkanisationssystems in einer zweiten Mischstufe wird die Fertigmischung erzeugt. Die Fertigmischung wird durch die Plastifizierungseinheit und die Zuführeinheit zu einer plastifizierten Kautschukmischung weiterverarbeitet. Während der Plastifizierung wurden die Kautschukmischungen wie in Tabelle 2 angegeben mit unterschiedlichen Drücken und Verweilzeiten behandelt.
Die Plastifizierungseinheit umfasst einen Schneckenextruder mit einer Garvey-Düse, wobei der Schneckenextruder genau eine Extruderschnecke, eine Länge von 190 mm und einen inneren Durchmesser von 19 mm aufweist. Die Zuführeinheit umfasst ein Metallblech als Ablage, auf dem die plastifizierte Kautschukmischung für eine bestimmte Verweilzeit gelagert wurde (vgl. Tabelle 2). Nach der entsprechenden Verweilzeit einer jeden plastifizierten Kautschukmischung auf der Ablage wurden die Kautschukmischungen auf ihre Temperatur hin untersucht und anschließend in einer Extrusionseinheit extrudiert. Die Extrusionseinheit umfasst einen Schneckenextruder mit einer Garvey-Düse, wobei der Schneckenextruder genau eine Extruderschnecke, eine Länge von 190 mm und einen inneren Durchmesser von 19 mm aufweist. Die Extrusionseinheit wies eine Regeltemperatur im Temperaturberiech von 90 °C bis 110 °C auf, wobei die Regeltemperatur die Temperatur ist, welche die Temperatur im Extruderzylinder um die Extruderschnecke beschreibt. Der Druck in der Extrusionseinheit während der Extrusion und die finale Temperatur am Ende der Extrusionseinheit geben Rückschlüsse über die Viskosität und Verarbeitbarkeit der plastifizierten Kautschukmischung.

### Ergebnisse:

**Tabelle 1: Experimentelle Daten der hergestellten Kautschukmischung**

| **Bestandteil** | **Einheit** | **Mischstufe** | **Vgl.-Exp. V1** | **Exp. E1** | **Exp. E2** | **Exp. E3** |
|---|---|---|---|---|---|---|
| | | | **Nicht erfi.-gemäß** | **Erfind.-gemäß** | **Erfind.-gemäß** | **Erfind.-gemäß** |
| NR | phr | 1 | 15 | 15 | 15 | 15 |
| SBR | phr | 1 | 85 | 85 | 85 | 85 |
| Carbon black | phr | 1 | 5 | 5 | 5 | 5 |
| Silica | phr | 1 | 95 | 95 | 95 | 95 |
| Harze | phr | 1 | 6 | 6 | 6 | 6 |
| ZnO | phr | 1 | 2 | 2 | 2 | 2 |
| Stearinsäure | phr | 1 | 1 | 1 | 1 | 1 |
| Weichmacher | phr | 1 | 25 | 25 | 25 | 25 |
| Schwefel | phr | 2 | 2 | 2 | 2 | 2 |
| Vulkanisationsmittel | phr | 2 | 2 | 2 | 2 | 2 |

**Tabelle 2: Experimentelle Daten der erfindungsgemäß und nicht erfindungsgemäß hergestellten Kautschukmischungen**

| | **Einheit** | **Vgl.-Exp. V1** | **Exp. E1** | **Exp. E2** | **Exp. E3** |
|---|---|---|---|---|---|
| **Eigenschaft** | | **Nicht erfind.-gemäß** | **Erfind. -gemäß** | **Erfind.-gemäß** | **Erfind.-gemäß** |
| **Vor Plastifizierung** | | | | | |
| Mooney-Viskosität der KM | MU | --- | 85 | 85 | 85 |
| Temperatur der KM | °C | --- | 21 | 21 | 21 |
| | | | | | |

| **Bei Plastifizierung** | | | | | |
|---|---|---|---|---|---|
| Temperatur der KM in der PE | °C | --- | 70 | 70 | 70 |
| Drehgeschwindigkeit der Schnecke in der PE | U / min | --- | 40 | 30 | 20 |
| | | | | | |
| Temperatur der KM bei Austritt aus der Düse | °C | --- | 75 | 75 | 75 |
| | | | | | |
| **Verweilzeit/ Lagerzeit** | Min. | --- | 5 | 5 | 5 |
| | | | | | |

| **Bei der Extrusion** | | | | | |
|---|---|---|---|---|---|
| Temperatur der KM vor Zufütterung in die EE | °C | 21 | 21 | 21 | 21 |
| Viskosität der KM | MU | 85 | < 85 | < 85 | < 85 |
| Drehgeschwindigkeit der Schnecke in der EE | U / min | 40 | 40 | 30 | 20 |
| Temperatur der KM bei Austritt aus der Garvey-Düse | °C | 75 | 75 | 75 | 75 |
| Druckreduktion zwischen PE und EE | % | 0 | 6 | 7 | 9 |
| Reduktion des Energieeintrags zwischen PE und EE | % | 0 | 14 | 17 | 15 |

| | | | | | |
|---|---|---|---|---|---|
| Abkürzungen: **KM** = Kautschukmischung; **PE** = Plastifizierungseinheit; **EE** = Extrusionseinheit | | | | | |

Aus den experimentellen Ergebnissen aus Tab. 2 geht hervor, dass bei einer Verweilzeit von 5 Minuten eine Kautschukmischung besser verarbeitet werden kann, wenn sie vorher in einer Plastifizierungseinheit plastifiziert wurde, da der Druck in der Extrusionseinheit durch das vorherige Plastifizieren im Vergleich zur Extrusion einer nicht plastifizierten Kautschukmischung verringert werden konnte (vergl. in der Zeile "Druckreduktion zwischen PE und EE" die dritte Spalte "0 %" mit der vierten bis sechsten Spalte "6 %", "7%", "9 %"). Es ist ersichtlich, dass durch die Druckreduktion der Energieverbrauch durch einen deutlich niedrigeren Energieeintrag in die Extrusionseinheit im Vergleich zur Extrusion einer nicht plastifizierten Kautschukmischung verringert werden konnte (vergl. in der Zeile "Reduktion des Energieeintrags zwischen PE und EE" die dritte Spalte "0 %" mit der vierten bis sechsten Spalte "14 %", "17 %", "15 %").
Das Plastifizieren einer Kautschukmischung vor dem Extrudieren hat weitere technische Vorteile, beispielsweise dass geringeren Drehgeschwindigkeit der Schnecke in der Extrusionseinheit bei ungefähr gleichen Drücken und Energieeinträgen eingesetzt werden können (vergl. in der Zeile "Reduktion des Energieeintrags zwischen PE und EE" die vierten bis sechsten Spalte "14 %" bei 40 U/min, "17 %" bei 30 U/min, "15 %" bei 20 U/min).

## Patentansprüche

1. Vorrichtung zum Senken der Viskosität einer schwefelvernetzbaren Kautschukmischung, umfassend
- eine Plastifizierungseinheit zum Plastifizieren von schwefelvernetzbaren Kautschukmischungen,
und
- eine der Plastifizierungseinheit nachgeschalteten Zuführeinheit zum Zuführen von Kautschukmischungen in eine Extrusionseinheit,
**dadurch gekennzeichnet, dass**
die Vorrichtung Mittel zur Regelung der Verweilzeit einer schwefelvernetzbaren Kautschukmischung in der Zuführeinheit umfasst.

2. Vorrichtung nach Anspruch 1, wobei
- die Plastifizierungseinheit einen Mischer, eine Zahnradpumpe, ein Walzwerk oder eine Extrusionseinheit mit einer oder mehreren Extruderschnecke aufweist
und/oder
- die Zuführeinheit ein Transportmittel, einen Speicher für Kautschukmischungen und/oder Kühlmittel aufweist.

3. Vorrichtung nach einem der vorangehenden Ansprüche, wobei die Vorrichtung zusätzlich eine der Zuführeinheit nachgeschalteten Extrusionseinheit umfasst.

4. Vorrichtung nach einem der vorangehenden Ansprüche, wobei die Vorrichtung zusätzlich zu den Mitteln zur Regelung der Verweilzeit einer schwefelvernetzbaren Kautschukmischung in der Zuführeinheit oder anstelle der Mittel zur Regelung der Verweilzeit einer schwefelvernetzbaren Kautschukmischung in der Zuführeinheit Mittel zur Regelung
a. der Drehgeschwindigkeit der Schnecken, Zahnräder oder Walzen der Plasitfizierungseinheit
und/oder
b. der Temperatur und des Druckes der Kautschukmischung in der Plastifizierungseinheit
und/oder
c. der Temperatur der in die Zuführeinheit überführten Kautschukmischung und/oder
d. der in die Zuführeinheit überführten Kautschukmischungsmenge umfasst.

5. Verwendung einer Vorrichtung wie in einem der vorangehenden Ansprüche definiert, zum Reduktion des Druckes beim Extrudieren oder zur Reduktion des Drehmoments der Extruderschnecke von schwefelvernetzbaren Kautschukmischungen bei der Temperatur T_{Extrusion}, wobei die Temperatur T_{Extrusion} im Bereich von 50 °C bis 150 °C liegt.

6. Verfahren zum Herstellen einer plastifizierten, schwefelvernetzbaren Kautschukmischung, umfassend die folgenden Verfahrensschritte:
a. Herstellen oder Bereitstellen einer schwefelvernetzbaren Kautschukmischung,
b. Plastifizieren der in Schritt a. hergestellten oder bereitgestellten schwefelvernetzbaren Kautschukmischung, bevorzugt Plastifizieren der schwefelvernetzbaren Kautschukmischung in einer Plastifizierungseinheit wie in einem der Ansprüche 1 bis 4 definiert,
c. Überführen der in Schritt b. plastifizierten schwefelvernetzbaren Kautschukmischung in eine Zuführeinheit
und
d. Zufüttern der in Schritt c. überführten schwefelvernetzbaren Kautschukmischung aus der Zuführeinheit in eine Extrusionseinheit.

7. Verfahren nach Anspruch 6, wobei das Verfahren zusätzlich den Schritt e. umfasst:
e. Extrudieren der in Schritt d. zugefütterten schwefelvernetzbaren Kautschukmischung in der Extrusionseinheit.

8. Verfahren nach einem der Ansprüche 6 bis 7, wobei die in Schritt a. hergestellte oder bereitgestellte schwefelvernetzbare Kautschukmischung zumindest teilweise
- eine Temperatur im Bereich von 20°C bis 150°C aufweist,
und/oder
- mindestens 50 phr Füllstoffe umfasst
und/oder
- höchstens 100 phr Harze umfasst.

9. Verfahren nach einem der Ansprüche 6 bis 8, wobei die in Schritt d. zugefütterte schwefelvernetzbare Kautschukmischung in der Extrusionseinheit zumindest teilweise eine Temperatur im Bereich von 20°C bis 150°C aufweist.

10. Verfahren nach einem der Ansprüche 6 bis 7, wobei die in Schritt a. bereitgestellte oder hergestellte schwefelvernetzbare Kautschukmischung eine Mooney-Viskosität gemäß ASTM D1646 (ML1+4 bei 100 °C) im Bereich von 50 MU bis 200 MU aufweist.

11. Extrudervorrichtung zum Herstellen von extrudierten schwefelvernetzbaren Kautschukmischungen umfassend eine Vorrichtung nach einem der Ansprüche 1, 2 oder 4 und eine weitere Extrusionseinheit.
